# EUROPÄISCHE PATENTANMELDUNG

(11) **EP 4 697 449 A1**
(43) Veröffentlichungstag der Anmeldung: **18.02.2026**
(21) Anmeldenummer: 24194462.8
(22) Anmeldetag: 14.08.2024
(51) Int. Cl.: H01M 10/613, H01M 10/623, H01M 10/6551, H01M 10/6556, H01M 10/6561, H01M 50/204, H01M 50/247, H01M 50/284, H01M 50/358, H01M 10/6554, H01M 10/6563

(54) **AKKUMULATOR MIT STRÖMUNGSKANÄLEN**

(71) Anmelder: Hilti Aktiengesellschaft, 9494 Schaan (LI)
(72) Erfinder: Seltmann, Daniel, 86842 Türkheim (DE)
(74) Vertreter: Hilti Aktiengesellschaft Corporate Intellectual Property

(57) **Zusammenfassung**

Akkumulator, insbesondere als Energieversorgung für eine Werkzeugmaschine, enthaltend ein Akku-Gehäuse, Akku-Schnittstelle, eine Steuereinheit und eine Anzahl an Energiespeicherelementen, wobei das Akku-Gehäuse an einer Oberseite wenigstens eine Auslassöffnung für einen Kühlstrom enthält.

Das Gehäuse enthält wenigstens eine erste und zweite Seitenschale, wobei mindestens eine Seitenschale an einem unteren Ende der Seitenschale wenigstens eine Einlassöffnung für einen Kühlstrom und an einer Wandinnenseite wenigstens einen im Wesentlichen vertikal verlaufenden Strömungskanal für einen Kühlstrom enthält, sodass zum Kühlen der Energiespeicherelemente ein Kühlstrom durch die Einlassöffnung, entlang dem Strömungskanal und durch die Auslassöffnung strömen kann.

## Beschreibung

Die vorliegende Erfindung betrifft einen Akkumulator, insbesondere als Energieversorgung für eine Werkzeugmaschine, enthaltend ein Akku-Gehäuse, Akku-Schnittstelle, eine Steuereinheit und eine Anzahl an Energiespeicherelementen, wobei das Akku-Gehäuse an einer Oberseite wenigstens eine Auslassöffnung für einen Kühlstrom enthält.

Des Weiteren betrifft die vorliegende Erfindung eine Werkzeugmaschine mit wenigstens einem Akkumulator.

Akkumulatoren als Energieversorgung für eine Werkzeugmaschine können sich während der Verwendung erhitzen und müssen gekühlt werden. Die zum Stand der Technik gehörenden Kühlsysteme für Akkumulatoren sind jedoch häufig zu ineffizient und/oder komplex.

Es ist damit Aufgabe der vorliegenden Erfindung das vorstehend beschriebene Problem zu lösen.

Die Aufgabe wird gelöst durch den Gegenstand des unabhängigen Patentanspruchs 1 und 9. Weitere vorteilhafte Ausführungsformen des erfindungsgemäßen Gegenstands sind in den entsprechenden abhängigen Patentansprüchen enthalten.

Die Aufgabe wird dabei insbesondere gelöst durch einen Akkumulator, insbesondere als Energieversorgung für eine Werkzeugmaschine, enthaltend eine Gehäuse, Schnittstelleneinrichtung, eine Steuereinheit und eine Anzahl an Energiespeicherelementen, wobei das Gehäuse an einer Oberseite wenigstens eine Auslassöffnung für einen Kühlstrom enthält.

Erfindungsgemäß ist vorgesehen, dass das Akku-Gehäuse wenigstens eine erste und zweite Seitenschale enthält, wobei mindestens eine Seitenschale an einem unteren Ende der Seitenschale wenigstens eine Einlassöffnung für einen Kühlstrom und an einer Wandinnenseite wenigstens einen im Wesentlichen vertikal verlaufenden Strömungskanal für einen Kühlstrom enthält, sodass zum Kühlen der Energiespeicherelemente ein Kühlstrom durch die Einlassöffnung, entlang dem Strömungskanal und durch die Auslassöffnung strömen kann.

Gemäß einer alternativen Ausführungsform kann es möglich sein, dass zwischen der Steuereinheit und den Energiespeicherelementen ein Freiraum enthalten ist, welcher so mit dem Strömungskanal und der Auslassöffnung verbunden ist, dass durch den Freiraum ein Kühlstrom zum Kühlen der Steuereinheit strömen kann. Der Freiraum kann auch als Aussparung oder Kavität bezeichnet werden.

Entsprechend einer weiteren alternativen Ausführungsform kann es möglich sein, dass wenigstens ein Kühlkörper so an einer Unterseite der Steuereinheit angeordnet ist, dass sich der wenigstens eine Kühlkörper in dem Freiraum zwischen der Steuereinheit und Energiespeicherelementen sowie in dem Kühlstrom befindet.

Gemäß einer weiteren alternativen Ausführungsform kann es möglich sein, dass der wenigstens eine Kühlkörper mindestens teilweise aus Metall und/oder Metalllegierung gefertigt ist, wobei das Metall und/oder die Metalllegierung einen höheren Wärmeleitkoeffizienten aufweist als das Material der Steuereinheit. Bei dem Metall kann es sich um Kupfer handeln.

Entsprechend einer weiteren alternativen Ausführungsform kann es möglich sein, dass der wenigstens eine Strömungskanal einen mindestens einmal gebogenen Verlauf aufweist. Der Verlauf kann dabei auch als geschlängelt bezeichnet werden.

Gemäß einer weiteren alternativen Ausführungsform kann es möglich sein, dass der wenigstens eine Strömungskanal mindestens eine Verästelung aufweist. Die Verästelung kann dabei von unten (d.h. von der Einlassöffnung) nach oben verlaufen, sodass die Verästelung stromabwärts zu der Auslassöffnung zunimmt bzw. mehr Äste hinzukommen. Alle Äste können dabei nahezu dieselbe Querschnittsfläche oder aber unterschiedlich große Querschnittsflächen aufweisen. Die Verästelung kann auch als Verzweigung bezeichnet werden.

Entsprechend einer weiteren alternativen Ausführungsform kann es möglich sein, dass die wenigstens eine Einlassöffnung und/oder Auslassöffnung jeweils ein reversibel betätigbares Verschlusselement enthält, sodass kein Kühlstrom durch den Akkumulator strömen kann.

Gemäß einer weiteren alternativen Ausführungsform kann es möglich sein, dass der wenigstens eine Kühlkörper an einer Plus- oder Minuskontakt des Akkumulators anliegend positioniert ist. Hierdurch kann auf einfache Art und Weise der Plus- oder Minuskontakt des Akkumulators gekühlt werden.

Darüber hinaus wird die Aufgabe gelöst durch eine Werkzeugmaschine mit wenigstens einem Akkumulator.

Entsprechend einer alternativen Ausführungsform kann es möglich sein, dass die Werkzeugmaschine wenigstens einen Lüfter zum Erzeugen eines Kühlstroms enthält, wobei der wenigstens eine Lüfter an einer Akkuschnittstelle positioniert ist, sodass ein von dem wenigstens einen Lüfter erzeugter Kühlstrom durch den Akkumulator strömen kann.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine Seitenansicht auf eine Werkzeugmaschine mit einer als Akkumulator ausgestalteten Energieversorgung;

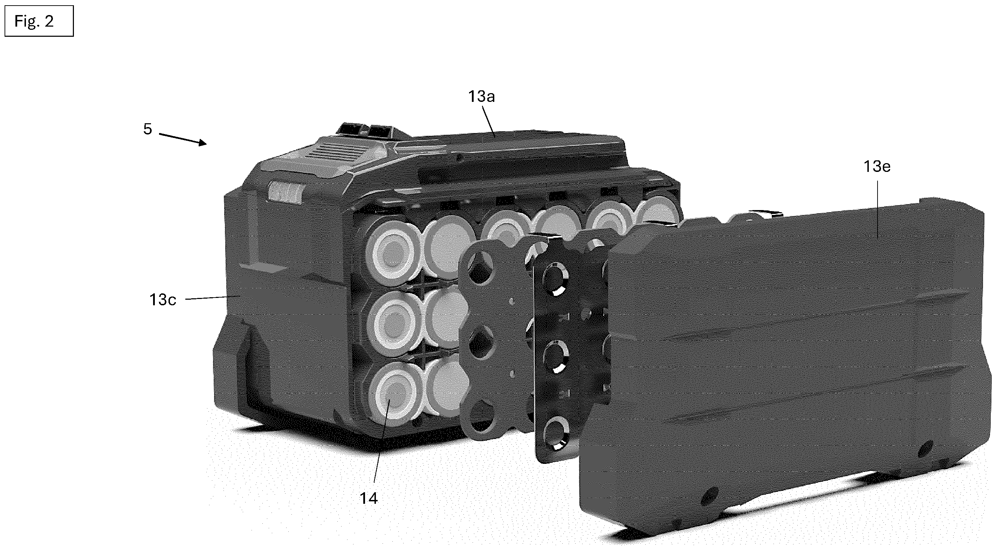

- Figur 2: eine perspektivische Seitenansicht auf den Akkumulator mit einer abgenommen Seitenschale;

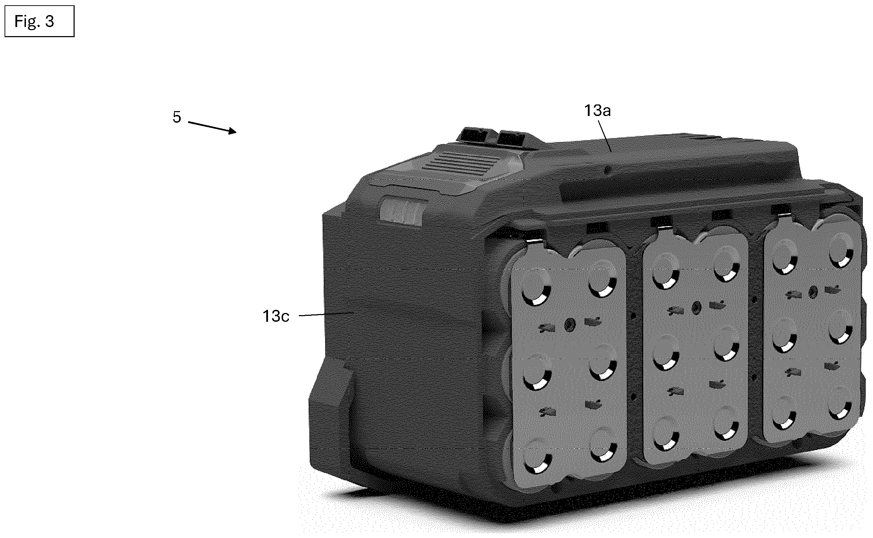

- Figur 3: einen perspektivische Seitenansicht auf den Akkumulator ohne eine Seitenschale;
- Figur 4: einen Schnittansicht durch einen Akkumulator;
- Figur 5: einen Innenansicht auf eine Wandinnenansicht einer Seitenschale;
- Figur 6: einen Seitenansicht auf das Innere eines Akkumulators mit angedeuteten Kühlströmen; und
- Figur 7: eine Unteransicht auf ein Deckelelement eines Akkumulators.

### Ausführungsbeispiele:

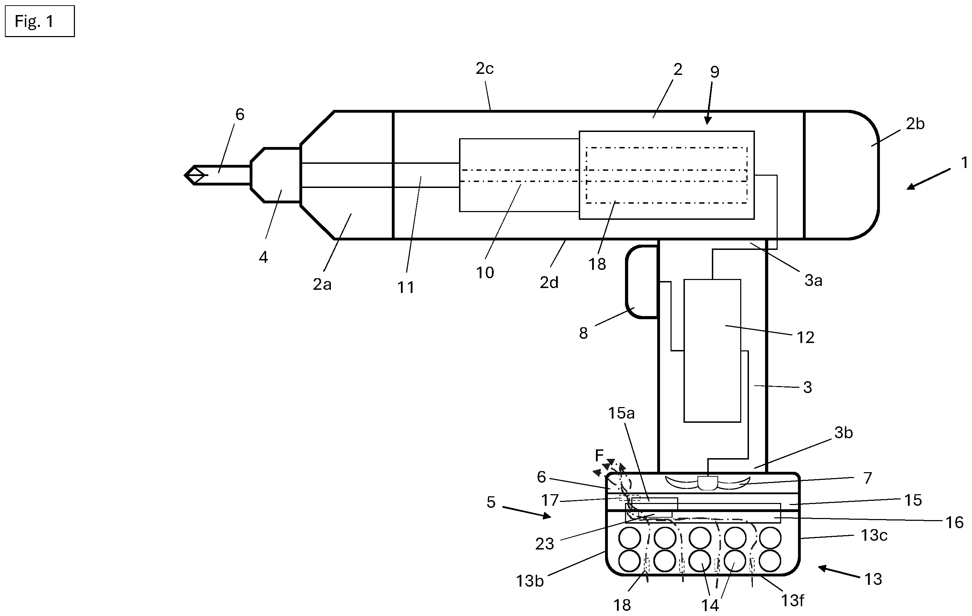

In Figur 1 ist eine Werkzeugmaschine 1 gezeigt.

Die in Figur 1 dargestellte Werkzeugmaschine 1 ist gemäß einer beispielhaften Ausführungsform in Form eines Akku-Schraubers ausgestaltet.

Gemäß einem alternativen Ausführungsbeispiel kann die Werkzeugmaschine 1 auch in Form einer Säge, eines Schleifgeräts, eines Bohrhammers oder dergleichen ausgestaltet sein.

Die als Akku-Schrauber ausgestaltete Werkzeugmaschine 1 enthält dabei im Wesentlichen ein Gehäuse 2, einen Handgriff 3 und eine Werkzeugaufnahme 4.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert.

Die Werkzeugaufnahme 4 dient zum Aufnehmen und Halten eines Werkzeugs 4a. In dem beispielhaften Ausführungsbeispiel ist das Werkzeug 4a als Schrauberbit ausgestaltet.

An dem unteren Ende 2d des Gehäuses 2 ist ein erstes Ende 3a des Handgriffs 3 positioniert. An dem zweiten Ende 3b des Handgriffs 3 ist eine Schnittstelle 6 vorgesehen.

Wie in Figur 1 ebenfalls gezeigt weist der Handgriff 3 an einer Vorderseite einen Aktivierungsschalter 8 auf, mit dem die Werkzeugmaschine 1 in einen Aktivierungszustand oder Deaktivierungszustand eingestellt werden kann. Durch Drücken des Aktivierungsschalters 8 wird die Werkzeugmaschine 1 aktiviert.

An die Schnittstelle 6 kann eine Energieversorgung 5 wiederlösbar befestigt werden.

Die Schnittstelle 6 der Werkzeugmaschine 1 enthält dabei einen Pluskontakt, einen Minuskontakt sowie einen Kommunikationskontakt. An den jeweiligen Pluskontakt, Minuskontakt sowie Kommunikationskontakt sind in einem verbundenen Zustand entsprechende Plus-, Minus- und Kommunikationsleitungen der Energieversorgung 5 wiederlösbar befestigt.

Weder der Pluskontakt, der Minuskontakt noch der Kommunikationskontakt der Schnittstelle 6 der Werkzeugmaschine 1 sind in den Figuren dargestellt.

Wie in Figur 1 angedeutet, ist ein Lüfter 7 an dem zweiten Ende 3b des Handgriffs 3 positioniert. Der Lüfter 7 dient zum Erzeugen eines Luftstroms F, der zum Kühlen einer mit der Werkzeugmaschine 1 verbundenen Energieversorgung 5 dienen kann. Der Lüfter 7 saugt hierzu Luft durch die Energieversorgung 5 an.

In dem vorliegenden Ausführungsbeispiel ist die Energieversorgung 5 in Form eines einzelnen Akkumulators ausgestaltete. Alternativ kann auch mehr als ein einziger Akkumulator als Energieversorgung 5 der Werkzeugmaschine 1 vorgesehen sein.

Die Energieversorgung 5 dient zum Versorgen der Werkzeugmaschine 1 mit elektrischer Energie.

Im Inneren des Gehäuses 2 ist im Wesentlichen einen Antrieb 9 in Form eines Elektromotors, eine Getriebevorrichtung 10, eine Antriebswelle 11 und eine Steuereinrichtung 12 positioniert.

Der als Elektromotor ausgestaltete Antrieb 9, die Getriebevorrichtung 10, die Antriebswelle 11 und die Werkzeugaufnahme 4 sind so im Inneren des Gehäuses 2 zueinander angeordnet, dass ein in dem Elektromotor 9 erzeugtes Drehmoment auf die Getriebevorrichtung 10, die Antriebswelle 11 und schließlich auf die Werkzeugaufnahme 4 bzw. auf das in der Werkzeugaufnahme 4 enthaltende Werkzeug 7 übertragen werden kann.

Der als Elektromotor ausgestaltete Antrieb 9 ist in Form eines bürstenlosen Gleichstrommotors ausgebildet.

Die Steuereinrichtung 12 dient zum Steuern und Regeln der verschiedenen Funktionen der Werkzeugmaschine 1. Zu den Funktionen gehört beispielsweise die Drehzahl des Antriebs 9.

Zur Steuerung und zur Versorgung mit elektrischer Energie ist der Lüfter 7 entsprechend mit der Steuereinrichtung 12 verbunden.

Die als Akkumulator ausgestaltete Energieversorgung 5 kann mit der Werkzeugmaschine 1 wiederlösbar verbunden werden, um die Werkzeugmaschine 1 mit elektrischer Energie zu versorgen.

Der Akkumulator 5 enthält im Wesentlichen ein Akku-Gehäuse 13, eine Anzahl an Energiespeicherelementen 14, eine Akku-Schnittstelle 15 sowie eine Steuereinheit 16.

Die Energiespeicherelemente 14 können auch als Akku-Zellen, Zellen oder Energiespeicherzellen bezeichnet werden und sind im Inneren des Akku-Gehäuses 13 angeordnet.

Das Akku-Gehäuse 13 enthält dabei im Wesentlichen ein Deckelelement 13a, eine vordere Wandseite 13b, eine hintere Wandseite 13c, eine erste und zweite Seitenschale 13d, 13e und ein Bodenelement 13f.

Die Akku-Schnittstelle 15 ist an der Außenseite des Deckelelements 13a angeordnet und dient zum elektrischen bzw. elektronischen sowie mechanischen Verbinden des Akkumulators 5 mit der Werkzeugmaschine 1 oder einer Ladevorrichtung. Wie nachher noch im Detail beschrieben enthält das Deckelelement 13a eine erste und zweite Auslassöffnung 17. In den Figuren ist lediglich die erste Auslassöffnung 17 gezeigt.

Die Ladevorrichtung dient zum Laden des Akkumulators 5 mit elektrischer Energie und ist in den Figuren nicht dargestellt.

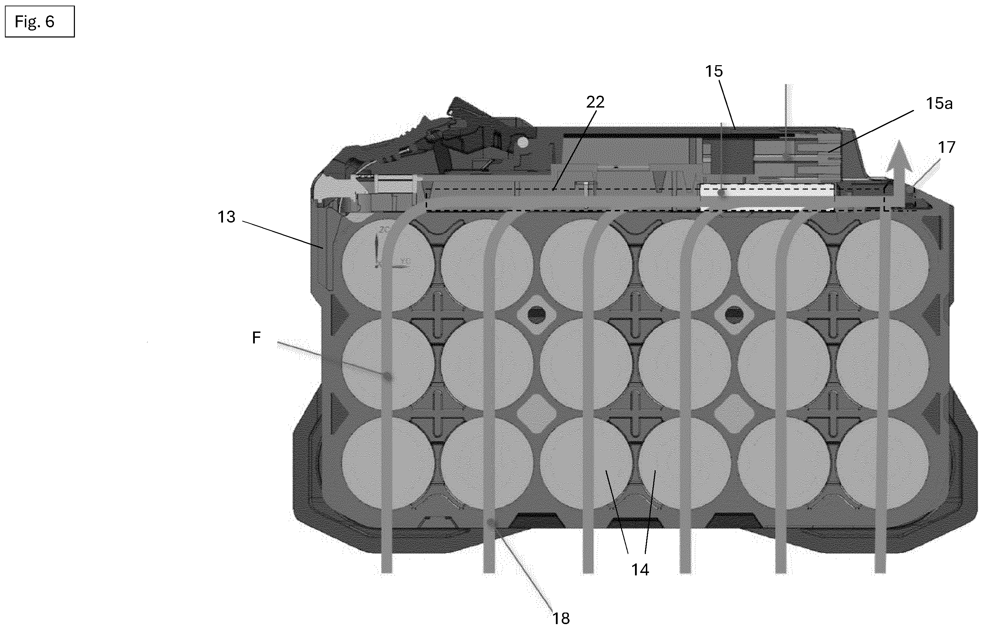

Zum elektrischen bzw. elektronischen Verbinden weist die Akku-Schnittstelle 15 einen Pluskontakt 15a, einen Minuskontakt und einen Kommunikationskontakt auf. In den Figuren ist lediglich der Pluskontakt 15a der Akku-Schnittstelle 15 gezeigt, vgl. Figur 6.

Die Akku-Schnittstelle 14 ist mit der Schnittstelle 6 der Werkzeugmaschine 1 so verbindbar, dass jeweils die Plus- und Minuskontakte 15a des Akkumulators 5 und der Werkzeugmaschine 1 miteinander verbindbar sind. Darüber hinaus sind die Kommunikationskontakte des Akkumulators 5 und der Werkzeugmaschine 1 miteinander verbindbar.

Der Plus- und Minuskontakt dient zur Erzeugen eines Stromkreises, wenn der Akkumulator 5 mit einer Werkzeugmaschine 1 oder einer Ladevorrichtung verbunden ist. Der Kommunikationskontakt dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherelemente 14 dienen zum Aufnehmen, Speichern und erneuten Abgeben elektrischer Energie.

Die Energiespeicherelemente 14 sind in zylindrischer Form sowie auf Basis einer Lithium-Ionen-Technologie ausgestaltet.

Jedes Energiespeicherelement 14 enthält an einem Ende eine Kontakteinrichtung, die zur Übertragung elektrischer Energie dient. Die einzelnen Kontakteinrichtung sind über entsprechende Leitungen mit der Steuereinheit 16 des Akkumulators 5 verbunden.

Alternativ können die Energiespeicherelemente 14 auch auf einer anderen geeigneten Technologie basieren.

Die zylindrische Form der Energiespeicherelemente 14 ist ebenfalls optional, sodass auch jede andere geeignete Form bzw. Geometrie gewählt werden kann. So ist es insbesondere auch möglich, dass die Energiespeicherelemente 14 als Pouchzellen ausgestaltet sind.

Es ist zudem auch möglich, dass der Akkumulator 5 sowohl zylindrische Energiespeicherelemente 14 als auch Pouch-Zellen enthält. Es ist insbesondere möglich, dass der Akkumulator 5 lediglich ein einziges zylindrisches Energiespeicherelement 14 und eine einzige Pouchzelle enthält.

Die Steuereinheit 16 des Akkumulators 5 regelt und steuert verschiedene Funktionen des Akkumulators 5. Zu den Funktion gehört unter anderen die Steuerung der Aufnahme und Abgabe von elektrischer Energie in bzw. aus den Energiespeicherelementen 14.

Darüber hinaus wird mit Hilfe der Steuereinheit 16 die Menge an elektrischer Energie gesteuert, die von den Energiespeicherelementen 14 aufgenommen oder abgegeben werden sollen.

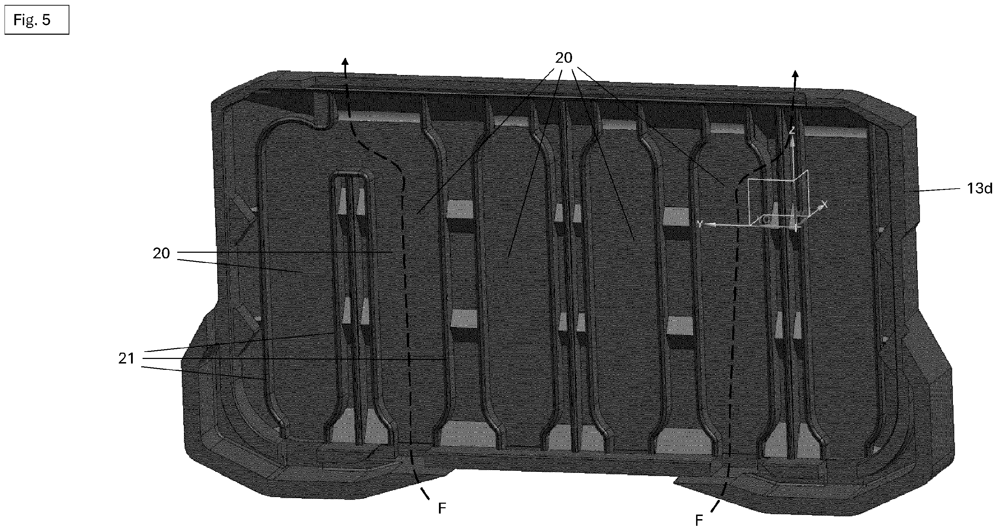

Wie insbesondere in Figur 5 gezeigt, weist eine Seitenschale 13d, 13e des Akku-Gehäuses 13 an einer unteren Seitenkante eine erste und zweite Einlassöffnung 18 auf. Die Einlassöffnungen 18 dienen dazu, einen Luftstrom F (auch Kühlstrom genannt) in das Innere des Akku-Gehäuses 13 einströmen zu lassen.

Alternativ können mehr oder weniger als zwei Einlassöffnungen 18 an der unteren Seitenkante des Akku-Gehäuses 13 vorhanden sein.

Des Weiteren enthält eine Seitenschale 13d, 13e des Akku-Gehäuses 23 an einer Wandinnenseite 19 eine Anzahl an vertikal verlaufenden Strömungskanälen 20 auf. Die Strömungskanäle 20 dienen dazu, den durch die Einlassöffnungen 18 einströmenden Luftstrom F zum Kühlen der nahe anliegenden Energiespeicherelemente 14 an der Innenseite einer Seitenschale 13d, 13e entlang strömen zu lassen. Wie vorstehend bereits beschrieben wird der Luftstrom F durch den Lüfter 7 am zweiten Ende 3b des Handgriffs 3 erzeugt.

Eine Anzahl an Abdichtelementen 21 dient zum entsprechenden Abdichten der Strömungskanäle 20, sodass der Luftstrom F geführt entlang den Strömungskanälen 20 strömen kann. In dem vorliegenden Ausführungsbeispiel enthält eine Seitenschale 13d, 13e sechs Strömungskanäle 20. Gemäß alternativer Ausführungsformen kann eine Seitenschale 13e. 13d auch mehr oder weniger als sechs Strömungskanäle 20 aufweisen, vgl. Figur 5.

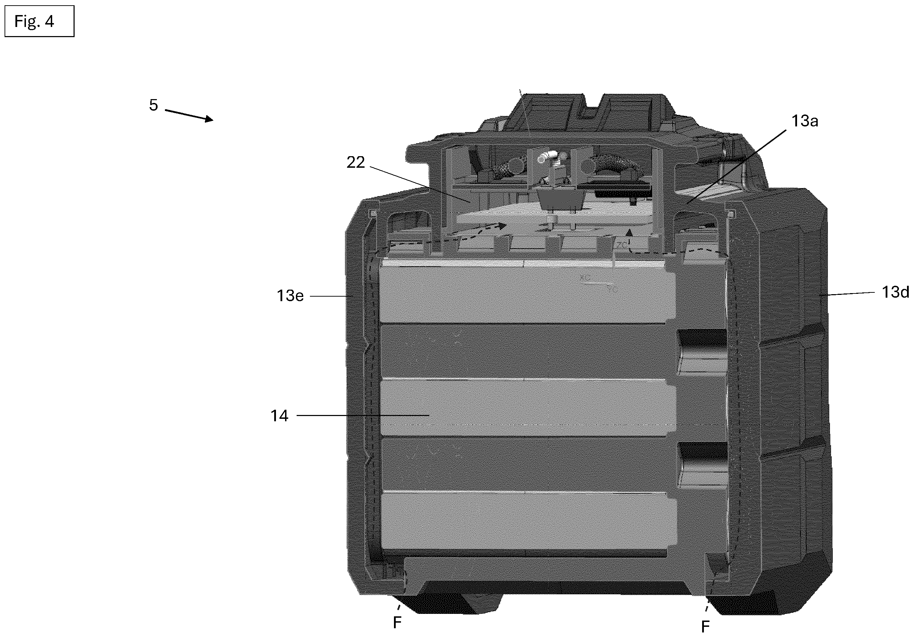

Wie in Figur 4 und 6 angedeutet, ist zwischen der Steuereinheit 16 und den Energiespeicherelementen 14 ein Freiraum 22 (auch Aussparung oder Kavität genannt) vorgesehen. Der Freiraum 22 ist so mit den Strömungskanälen 20 an den Seitenschalen 13d, 13e verbunden, dass der Kühlstrom F von den Strömungskanälen 20 in den Freiraum 22 strömen kann und hierdurch sowohl die Steuereinheit 16 als auch die Energiespeicherelemente 14 kühlt.

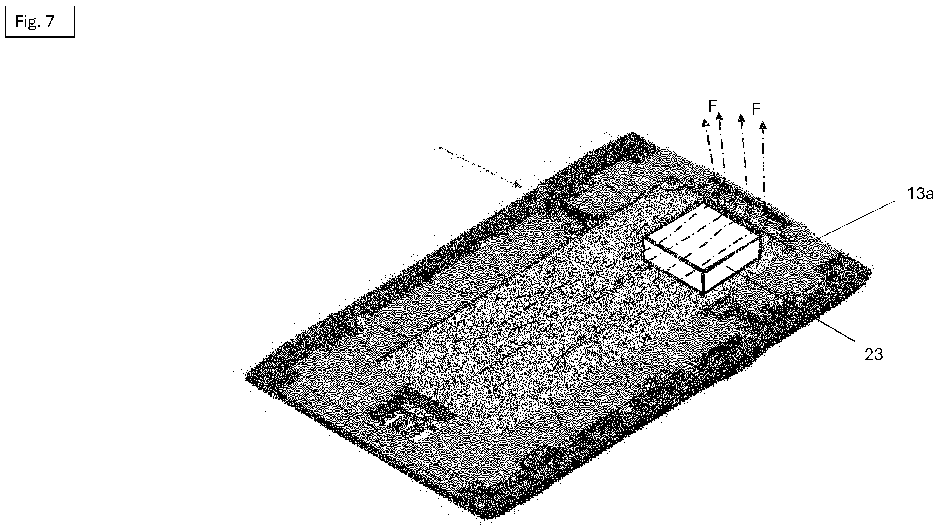

Ein Kühlkörper 23 ist so in dem Freiraum 22 positioniert, dass der Kühlkörper 23 in dem Kühlstrom F liegt und so von dem Kühlstrom F gekühlt wird. Wie insbesondere in Figur 7 gezeigt, ist der Kühlkörper 23 mit einer Seitenfläche 13d, 13e an einer Unterseite der Steuereinheit 16 befestigt. Wenn der Kühlkörper 23 durch den Kühlstrom F abkühlt, kann durch den flächigen Kontakt ungewollte Wärme von der Steuereinheit 16 auf den Kühlkörper 23 übertragen werden.

Gemäß einer besonderen Ausführungsform ist der Kühlkörper 23 nicht nur mit der Steuereinheit 16 verbunden, sondern steht auch in Kontakt mit dem Pluskontakt 15a, Minuskontakt und Kommunikationskontakt der Akku-Schnittstelle 15, vgl. Figur 6. Da der Pluskontakt 15a und Minuskontakt bei der Verwendung als Energiequelle für eine Werkzeugmaschine 1 besonders viel ungewünschte Wärme erzeugen kann.

Die erste und zweite Auslassöffnung 17 an einem Ende des Deckelelements 13a des Akku-Gehäuses 13 vorgesehen und strömungstechnisch mit dem Freiraum 22 so verbunden, dass der Kühlstrom F durch die Auslassöffnungen 17 aus dem Akku-Gehäuse 13 hinausströmen können.

### Bezugszeichen

- 1: Werkzeugmaschine
- 2: Gehäuse der Werkzeugmaschine
- 2a: vorderes Ende des Gehäuses
- 2b: hinteres Ende des Gehäuses
- 2c: oberes Ende des Gehäuses
- 2d: unteres Ende des Gehäuses
- 3: Handgriff
- 3a: erstes Ende des Handgriffs
- 3b: zweites Ende des Handgriffs
- 4: Werkzeugaufnahme
- 4a: Werkzeug
- 5: Energieversorgung
- 6: Schnittstelle der Werkzeugmaschine
- 7: Lüfter
- 8: Aktivierungsschalter
- 9: Antrieb
- 10: Getriebevorrichtung
- 11: Antriebswelle
- 12: Steuereinrichtung
- 13: Akku-Gehäuse
- 13a: Deckelelement des Akku-Gehäuses
- 13b: vordere Wandseite des Akku-Gehäuses
- 13c: hintere Wandseite des Akku-Gehäuses
- 13d: erste Seitenschale des Akku-Gehäuses
- 13e: zweite Seitenschale des Akku-Gehäuses
- 13f: Bodenelement des Akku-Gehäuses
- 14: Energiespeicherelement
- 15: Akku-Schnittstelle
- 15a: Pluskontakt der Akku-Schnittstelle
- 16: Steuereinheit
- 17: Auslassöffnung
- 18: Einlassöffnung
- 19: Wandinnenseite einer Seitenschale
- 20: Strömungskanal
- 21: Abdichtelement
- 22: Freiraum
- 23: Kühlkörper
- F: Kühlstrom

## Patentansprüche

1. Akkumulator (5), insbesondere als Energieversorgung für eine Werkzeugmaschine (1), enthaltend ein Akku-Gehäuse (13), Akku-Schnittstelle (15), eine Steuereinheit (16) und eine Anzahl an Energiespeicherelementen (14), wobei das Akku-Gehäuse (13) an einer Oberseite wenigstens eine Auslassöffnung (17) für einen Kühlstrom (F) enthält,
**dadurch gekennzeichnet, dass** das Akku-Gehäuse (13) wenigstens eine erste und zweite Seitenschale (13d, 13e) enthält, wobei mindestens eine Seitenschale (13d, 13e) an einem unteren Ende der Seitenschale (13d, 13e) wenigstens eine Einlassöffnung (18) für einen Kühlstrom (F) und an einer Wandinnenseite (19) wenigstens einen im Wesentlichen vertikal verlaufenden Strömungskanal (20) für einen Kühlstrom (F) enthält, sodass zum Kühlen der Energiespeicherelemente (14) ein Kühlstrom (F) durch die Einlassöffnung (18), entlang dem Strömungskanal (20) und durch die Auslassöffnung (17) strömen kann.

2. Akkumulator (5) nach Anspruch 1,
**dadurch gekennzeichnet, dass** zwischen der Steuereinheit (16) und den Energiespeicherelementen (14) ein Freiraum (22) enthalten ist, welcher so mit dem Strömungskanal (20) und der Auslassöffnung (17) verbunden ist, dass durch den Freiraum (22) ein Kühlstrom (F) zum Kühlen der Steuereinheit (16) strömen kann.

3. Akkumulator (5) nach Anspruch 2,
**dadurch gekennzeichnet, dass** wenigstens ein Kühlkörper (23) so an einer Unterseite der Steuereinheit (16) angeordnet ist, dass sich der wenigstens eine Kühlkörper (23) in dem Freiraum (22) zwischen der Steuereinheit (16) und Energiespeicherelementen (14) sowie in dem Kühlstrom (F) befindet.

4. Akkumulator (5) nach wenigstens einem der Ansprüche 1 bis 3,
**dadurch gekennzeichnet, dass** der wenigstens eine Kühlkörper (23) mindestens teilweise aus Metall und/oder Metalllegierung gefertigt ist, wobei das Metall und/oder die Metalllegierung einen höheren Wärmeleitkoeffizienten aufweist als das Material der Steuereinheit (16).

5. Akkumulator (5) nach wenigstens einem der Ansprüche 1 bis 4,
**dadurch gekennzeichnet, dass** der wenigstens eine Strömungskanal (20) einen mindestens einmal gebogenen Verlauf aufweist.

6. Akkumulator (5) nach wenigstens einem der Ansprüche 1 bis 5,
**dadurch gekennzeichnet, dass** der wenigstens eine Strömungskanal (20) mindestens eine Verästelung aufweist.

7. Akkumulator (5) nach wenigstens einem der Ansprüche 1 bis 6,
**dadurch gekennzeichnet, dass** die wenigstens eine Einlassöffnung (18) und/oder Auslassöffnung (17) jeweils ein reversibel betätigbares Verschlusselement enthält, sodass kein Kühlstrom (F) durch den Akkumulator (5) strömen kann.

8. Akkumulator (5) nach wenigstens einem der Ansprüche 1 bis 7,
**dadurch gekennzeichnet, dass** der wenigstens eine Kühlkörper an einem Plus- oder Minuskontakt des Akkumulators anliegend positioniert ist.

9. Werkzeugmaschine (1) mit wenigstens einem Akkumulator (5) nach wenigstens einem der Ansprüche 1 bis 8.

10. Werkzeugmaschine (1) mit wenigstens einem Akkumulator (5) nach Anspruch 9,
**dadurch gekennzeichnet, dass** die Werkzeugmaschine (1) wenigstens einen Lüfter () zum Erzeugen eines Kühlstroms enthält, wobei der wenigstens eine Lüfter an einer Akkuschnittstelle positioniert ist, sodass ein von dem wenigstens einen Lüfter erzeugter Kühlstrom durch den Akkumulator strömen kann.
